# EUROPEAN PATENT APPLICATION

(11) **EP 4 300 681 A1**
(43) Date of publication of application: **03.01.2024**
(21) Application number: 22759638.4
(22) Date of filing: 22.02.2022
(51) Int. Cl.: H01M 50/213, H01M 50/271, H01M 50/35, H01M 50/367

(54) **BATTERY PACK**

(30) Priority: 25.02.2021 JP 2021029198
(71) Applicant: Panasonic Energy Co., Ltd., Osaka 570-8511 (JP)
(72) Inventor: TAKEDA, Kensaku, Kadoma-shi, Osaka 571-0057 (JP); WAKABAYASHI, Takeaki, Kadoma-shi, Osaka 571-0057 (JP)
(74) Representative: Novagraaf International SA
(86) International application number: PCT/JP2022/007203
(87) International publication number: WO 2022/181602

(57) **Abstract**

A flammable gas within a battery pack is safely released to outside from the battery pack while preventing breakage of a fitting connection portion of a case due to increase in an internal pressure. In the battery pack, a battery unit (10) is accommodated in an outer package case (2) including a first case (2A) and a second case (2B). The first case (2A) and the second case (2B) are connected to each other by stacking overlap plates of first circumferential wall (4A) and second circumferential wall (4B) at opening end portions of the cases. A first overlap plate (5A) stacked outside is connected to the first circumferential wall (4A). A second overlap plate (5B) stacked inside is connected to the second circumferential wall (4B). The first overlap plate (5A) includes reinforcement ribs (6) protruding inward. The second overlap plate (5B) includes fit portions which are slits or grooves configured to guide the reinforcement ribs (6). The first case (2A) and the second case (2B) are connected to each other such that the reinforcement ribs (6) are guided to the fit portions to stack first overlap plate (5A) on second overlap plate (5B).

## Description

### TECHNICAL FIELD

The present invention relates to a battery pack.

### BACKGROUND ART

A battery pack including a lot number of secondary battery cells connected in series or parallel to one another is used as a power supply for a portable electric device such as an electric cleaner or an electric power tool, or a backup power supply for a server, home, office, or factory power supply device for stationary storage, and is further used in a driving power supply of a power-assisted bicycle, a driving power supply of an electric scooter, an electric cart, or a vehicle such as a hybrid vehicle or an electric automatic vehicle. Lithium-ion secondary batteries are often used as the secondary battery cells used in such a battery pack, and the lithium-ion secondary batteries may lead to an unsafe event involving smoke or fire due to some abnormality such as penetration of a bolt during a collision. Suppose an unsafe event occurs in the battery pack, fire from the secondary battery cells inside the battery pack may be released to the outside of the battery pack.

In such a battery pack, a structure is adopted in which a battery unit including secondary battery cells is accommodated in an outer package case made of resin. The outer package case often adopts a structure in which a first case and a second case, each of which has a box shape and is provided with a circumferential wall around a bottom plate, are connected to each other through an opening. For example, such an outer package case has a fitting structure in which step portions each having a thin thickness are provided on an inner side surface of an opening of one case and an outer side surface of an opening of the other case, and which is connected by a stacked portion obtained by fitting the step portions to each other and stacking. (PTLs 1 and 2) The structure allows the first case and the second case to be accurately connected while the thickness of the stacked part of the first case and the second case is the same as that of the other circumferential wall portion.

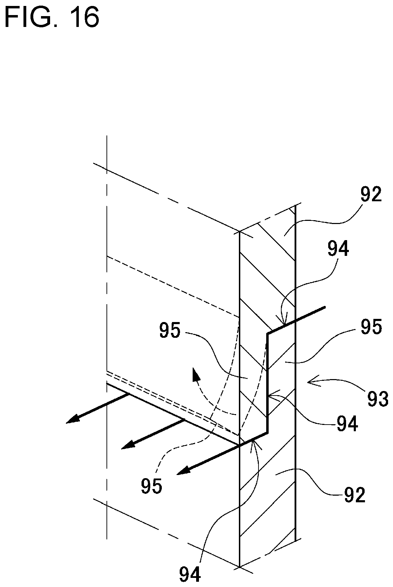

However, in a pack battery including such an outer package case, when an abnormality such as thermal runaway occurs in accommodated secondary battery cells and a high-temperature and high-pressure gas is released, the inside of the outer package case is filled with the gas. As indicated by an arrow shown in FIG. 16, flow path 94 connecting from fitting connection portion 93 of outer package case 92 to the outside is generated, and the high-temperature and high-pressure gas may be injected from flow path 94 to the outside of the case, then developing to fire and accompanying leakage fire. In particular, in fitting connection portion 93 of the outer package case, stacked portions 95 are formed to be thin. Therefore, when the high-pressure gas passes through a boundary of fitting connection portion 93, as indicated by a chain line shown in FIG. 16, outer stacked portion 95 easily deforms in an outward direction by a gas pressure, so that a large amount of flammable gas may be released to the outside at a time, which causes fire. Therefore, in the battery pack in related art, in order to prevent fire from the fitting connection portion of the outer package case, it is necessary to reinforce the fitting connection portion with an expensive refractory sheet or the like.

### Citation List

### Patent Literature

PTL 1: Japanese Patent Laid-Open Publication No. 07-10591
PTL 2: Japanese Patent Laid-Open Publication No. 10-241647

### SUMMARY OF THE INVENTION

### Problem to Be Solved

The invention is developed to solve the above problems, and one object of the invention is to provide a battery pack capable of safely releasing a flammable gas inside the battery pack to the outside of the battery pack while preventing breakage of a fitting connection portion of a case due to an increase in internal pressure of the battery pack caused by a gas discharged due to a battery abnormality, thereby improving the safety.

### Solution to Problem and Effect of Invention

A battery pack according to a first aspect of the invention includes a battery unit and an outer package case accommodating the battery unit therein. The outer package case includes: a first case including a first surface plate and a first circumferential wall provided around the first surface plate; and a second case including a second surface plate and a second circumferential wall provided around the second surface plate. The first circumferential wall and the second circumferential wall have respective opening end portions coupled to each other to allow the first case and the second case to constitute a closed structure accommodating the battery unit therein. Overlap plates are unitarily connected to the first circumferential wall and the second circumferential wall along respective opening ends of the first circumferential wall and the second circumferential wall, the overlap plates being stacked inside and outside on each other. A first overlap plate out of the overlap plates is connected to the first circumferential wall at the outer side. A second overlap plate out of the second overlap plates is connected to the second circumferential wall at the inner side. The first overlap plate includes reinforcement ribs which extend from an opening end of the first overlap plate toward the first circumferential wall and which protrude inward. The second overlap plate includes fit portions therein which are slits or grooves configured to guide the reinforcement ribs. The first case and the second case are connected to each other such that by the fit portions guide the reinforcement ribs to stack the first overlap plate on the second overlap plate.

The above configuration provides an advantageous effect that even in a state where the internal pressure of the outer package case increases by a gas discharged due to a battery abnormality, the breakage of the fitting connection portion of the case is prevented, and the flammable gas inside the battery pack is safely released to the outside of the battery pack, thus enhancing safety. This is because, in the battery pack described above, the first case and the second case are connected to each other by stacking the first overlap plate connected to the first circumferential wall of the first case and the second overlap plate connected to the second circumferential wall of the second case on each other, and the first case and the second case are connected to each other by providing, the reinforcement ribs protrudes inward on the first overlap plate stacked outside, and the second overlap plate stacked inside includes the fit portions which are slits or grooves for guiding the reinforcement ribs to the fit portions, to guide the reinforcement ribs with the fit portions and stack the first overlap plate on the second overlap plate. This structure increases the rigidity of the first overlap plate and prevent deformation outward due to the gas pressure by providing the reinforcement ribs on an inner surface of the first overlap plate stacked outside. Therefore, in a state where the internal pressure of the outer package case is increased, the flammable gas in the case is prevented from breaking the fitting connection portion and being discharged to the outside at a time, which can effectively prevent a flame from leaking to the outside. The fit portions of the reinforcement ribs in the second overlap plate guide the reinforcement ribs to allow the first overlap plate and the second overlap plate to be connected by a fitting structure. Therefore, the first overlap plate is reinforced while appropriately connecting the first overlap plate to the second overlap plate without increasing the thickness of a part in which the first overlap plate and the second overlap plate are stacked on each other.

In a battery pack according to a second aspect of the invention, the fit portions are the slits, and heights of the reinforcement ribs are equal to a thickness of the second overlap plate. This configuration allows the first overlap plate to be fit to the second overlap plate reliably while distal end surfaces of the reinforcement ribs of the first overlap plate are flush with an inner surface of the second overlap plate and the inner side surface of the case has a planar shape.

In a battery pack according to a third aspect of the invention, the second overlap plate includes second reinforcement ribs which extend from an opening end of the second overlap plate toward the second circumferential wall and which protrude outward. The first overlap plate includes second fit portions therein which are slits or grooves configured to guide the second reinforcement ribs. The first case and the second case are connected to each other such that the second fit portions guide the second reinforcement ribs to stack the first overlap plate on the second overlap plate.

In to the above configuration, the second reinforcement ribs are provided on the second overlap plate in addition to the reinforcement ribs on the first overlap plate, This configuration increases the rigidity of both the first overlap plate and the second overlap plate to more effectively prevent the overlap plates from deforming in an outward direction due to the gas pressure and the fitting connection portion from being broken. Therefore, when the internal pressure of the outer package case increases, the flammable gas inside the battery pack is released to the outside of the battery pack more and effectively prevent the flame from leaking to the outside. The second fit portions in the first overlap plate connect the reinforcement ribs and the second reinforcement ribs to the fit portions and the second fit portions while being fitted to the fit portions and the second fit portions, respectively. Therefore, the first overlap plate and the second overlap plate are reinforced while appropriately connecting the first overlap plate to the second overlap plate without increasing the thickness of a stacked part of the first overlap plate and the second overlap plate.

In a battery pack according to a fourth aspect of the invention, the second fit portions are slits, and heights of the second reinforcement ribs is equal to a thickness of the first overlap plate. In the above configuration, distal end surface of the second reinforcement ribs is flush with the outer surface of the first overlap plate while forming a structure in which the second reinforcement ribs are disposed in the slits provided in the first overlap plate to be exposed, the touch feeling can be improved while improving the appearance.

In a battery pack according to a fifth aspect of the invention, the fit portions are the slits and the second fit portions are the slits. Each fit portion out of the fit portions and a corresponding one second fit portion of the second fit portions adjacent to each other form a meandering flow path between the each fit portion and the corresponding one second fit portion. The meandering flow path is configured to passes from an inside of the outer package case to an outside of the outer package case through the meandering flow path. In the above configuration, in a state where the reinforcement ribs are fitted to the slits provided in the second overlap plate and the second reinforcement ribs are fitted to the slits provided in the first overlap plate, the meandering flow path through which the gas passes is formed between the fit portion and the second fit portion adjacent to each other. Therefore, a gas filling the outer package case due to a battery abnormality is discharged smoothly outside the outer package case via meandering flow paths formed in the overlap plates. In particular, since the fit portions and the second fit portions are slits, a total length of an inflow portion and an outflow portion of the meandering flow paths formed in the inner surface and the outer surface of the overlap plate can be increased, and the gas in the outer package case can be safely discharged to the outside. Accordingly, it is possible to effectively prevent the flame from leaking to the outside by preventing a discharge amount of the high-temperature gas discharged to the outside of the outer package case.

In a battery pack according to a sixth aspect of the invention, the second overlap plate includes reinforcement ribs which extend from an opening end the second overlap plate toward the second circumferential wall and which protrude inward. The first case and the second case are connected to each other such that the first overlap plate is stacked on the second overlap plate.

In the above configuration, the second reinforcement ribs are provided on the second overlap plate in addition to the reinforcement ribs on the first overlap plate. This configuration increases the rigidity of both the first overlap plate and the second overlap plate to effectively prevent the overlap plates from deforming in an outward direction due to the gas pressure and the fitting connection portion from being broken. Therefore, when the internal pressure of the outer package case increases, the flammable gas inside the battery pack is safely released to the outside of the battery pack more and the flame is effectively prevented from leaking to the outside. Since the second fit portions protrude from an inner side surface of the second overlap plate, it is possible to reduce the influence of the second reinforcement ribs provided on the second overlap plate on the first overlap plate.

In a battery pack according to a seventh aspect of the invention, thicknesses of the first overlap plate and the second overlap plate are 1/2 of a thickness of the circumferential walls. The above configuration allows an inner surface and an outer surface of the stacked part to be flush with a surface of the circumferential wall by determining the thickness of the stacked part of the first overlap plate and the second overlap plate to be equal to the thicknesses of the circumferential walls while realizing a stable connection state by making the thicknesses of the first overlap plate and the second overlap plate equal.

In a battery pack according to an eighth aspect of the invention, cross sections of the circumferential walls of the first case and the second case have rectangular shapes, and the overlap plates are provided over entire circumferences of opening ends of the circumferential walls. The reinforcement ribs and the fit portions are provided at portions of the overlap plates located on long sides of the rectangular shapes of the circumferential walls.

In the above configuration, the reinforcement ribs and the fit portions are provided at portions of the overlap plates located on long sides of the first case and the second case of which the cross-sectional shapes of the circumferential walls are rectangular shape. The circumferential walls on the long sides deforming easily than short sides are reinforced with the reinforcement ribs to effectively prevent the breakage of the fitting connection portion of the outer package case.

### BRIEF DESCRIPTION OF DRAWINGS

FIG. 1 is a perspective view of a battery pack according to Exemplary Embodiment 1 of the invention.
FIG. 2 is a partially enlarged exploded perspective view of the battery pack shown in FIG. 1 when viewed from left.
FIG. 3 is a partially enlarged exploded perspective view of the battery pack shown in FIG. 1 when viewed from right.
FIG. 4 is an exploded perspective view of a battery unit of the battery pack shown in FIG. 2.
FIG. 5 is an enlarged cross-sectional view of the battery pack taken along a line V-V shown in FIG. 1.
FIG. 6 is an enlarged exploded cross-sectional view of the battery pack taken along a line VI-VI shown in FIG. 1.
FIG. 7 is an enlarged exploded cross-sectional view of another example of overlap plates of an outer package case.
FIG. 8 is a partially enlarged exploded perspective view of the outer package case of the battery pack according to exemplary Embodiment 2 of the invention.
FIG. 9 is an enlarged cross-sectional view of the outer package case of the battery pack according to Embodiment 2 of the invention.
FIG. 10 is a partially enlarged exploded perspective view of the outer package case of the battery pack according to Exemplary Embodiment 3 of the invention.
FIG. 11 is an enlarged cross-sectional view of the outer package case of the battery pack according to Embodiment 3 of the invention.
FIG. 12 is a perspective view of the battery pack according to exemplary Embodiment 4 of the invention.
FIG. 13 is a partially enlarged exploded perspective view of the outer package case of the battery pack shown in FIG. 12.
FIG. 14 is an enlarged cross-sectional view of the outer package case of the battery pack shown in FIG. 12.
FIG. 15 is a cross-sectional perspective view of the battery pack shown in FIG. 12 while the battery pack discharges a gas from the inside to the outside of the outer package case.
FIG. 16 is an enlarged cross-sectional perspective view of a conventional battery pack for showing a state where a fitting connection portion of an outer package case of the conventional battery pack breaks.

### DESCRIPTION OF EMBODIMENTS

Exemplary embodiments of the invention will be described below with reference to the drawings. The embodiments described below are examples for embodying a technical idea of the invention, and the invention is not limited to the following. The present specification does not specify members described in the claims as members in the embodiments. In particular, dimensions, materials, shapes, relative arrangements, and the like of components to be described in the embodiments are not intended to limit the scope of the invention unless particularly specified, and are merely illustrative examples. Sizes, positional relations, and the like of the members shown in the drawings may be exaggerated to clarify the description. In the following description, the same names and reference numerals denote the same or similar members, and detailed description thereof is omitted as appropriate. Regarding each element constituting the invention, an aspect may be implemented in which a plurality of elements are constituted by the same member and the plurality of elements are shared by one member, or conversely, functions of one member may be assigned and implemented by a plurality of members.

A battery pack according to the invention is used as a power supply for a portable electric device such as an electric cleaner or an electric power tool, or a backup power supply for server, home, office, or factory power supply device for stationary storage, and is further used in a driving power supply of a power-assisted bicycle, a driving power supply of an electric scooter, an electric cart, or a vehicle such as a hybrid vehicle or an electric automatic vehicle. A battery pack used as the power supply for a portable electric device will be described as an embodiment according to the invention below.

### Exemplar Embodiment 1

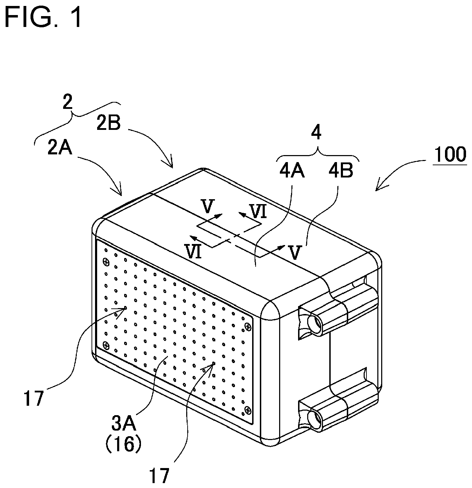

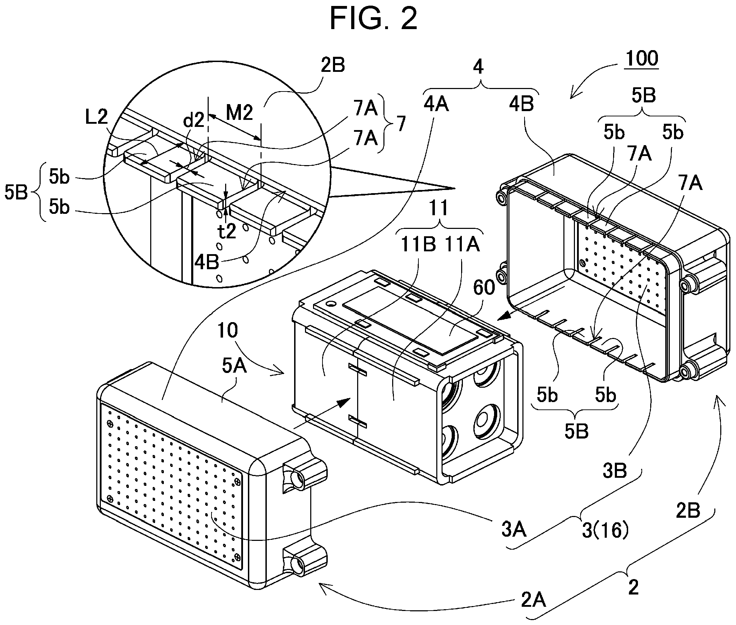

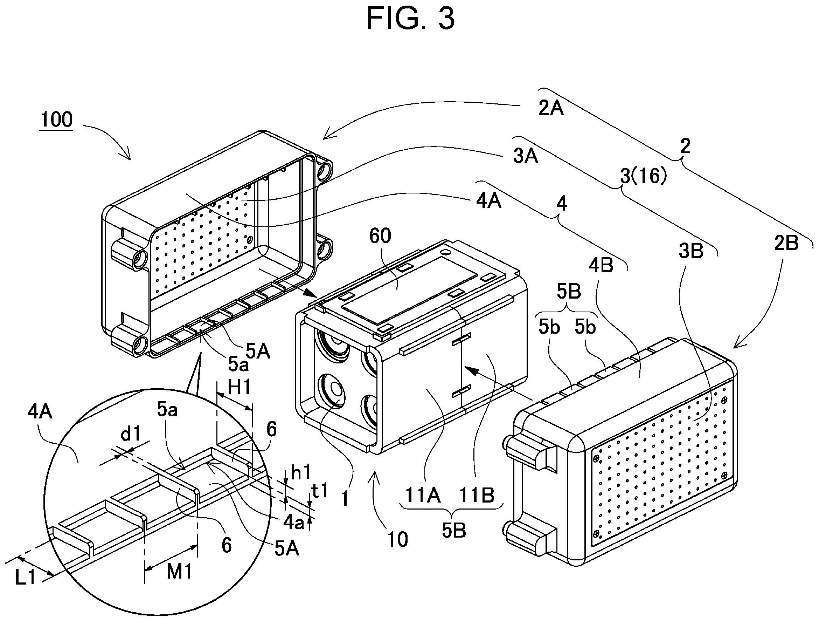

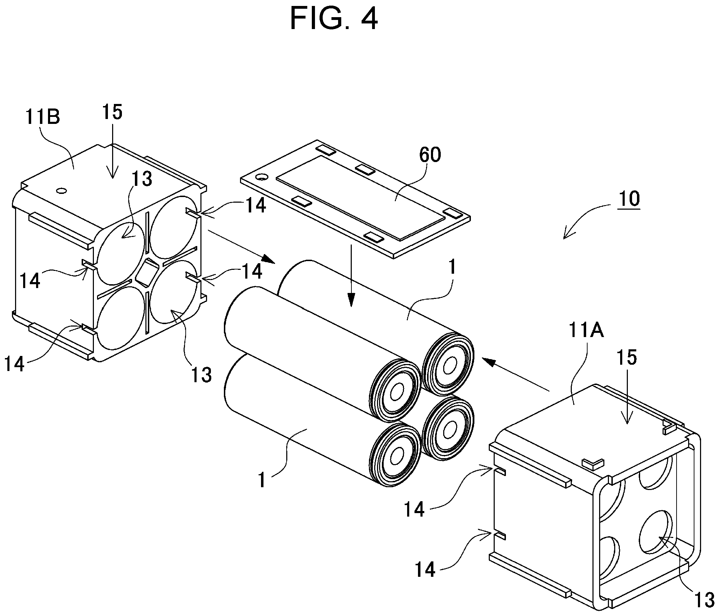

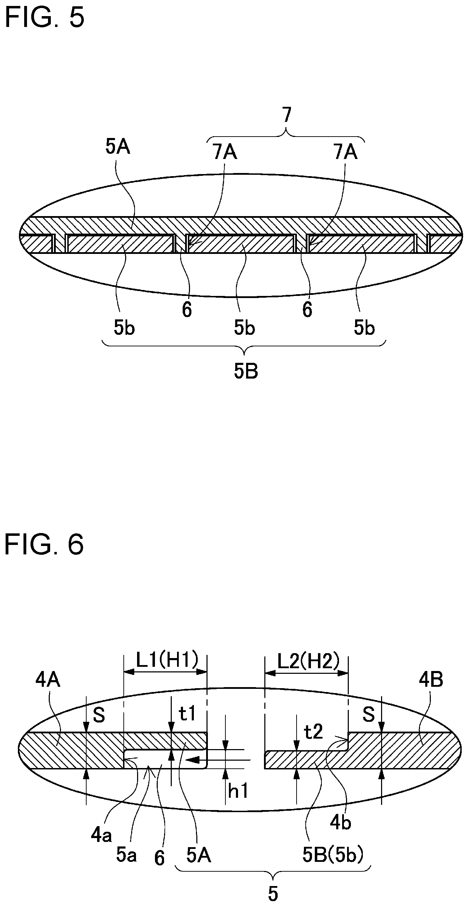

Battery pack 100 according to Exemplary Embodiment 1 of the present invention is shown in FIGS. 1 to 5. FIG. 1 is an external perspective view of the battery pack. FIGS. 2 and 3 are exploded perspective views of the battery pack shown in FIG. 1. FIG. 4 is an exploded perspective view of a battery unit of the battery pack shown in FIG. 2. FIG. 5 is an enlarged cross-sectional view of an outer package case taken along line V-V shown in FIG. 1. FIG. 6 is an enlarged cross-sectional view of the outer package case taken along line VI-VI shown in FIG. 1. In battery pack 100 shown in the figures, battery unit 10 including secondary battery cells is accommodated in outer package case 2.

### Battery Unit 10

Battery unit 10 includes secondary battery cells 1 accommodated in battery holder 11 and arranged at predetermined positions. In battery unit 10, an outer shape of battery holder 11 is slightly smaller than an inner shape of outer package case 2 to be accommodated inside outer package case 2. FIG. 4 is an exploded perspective view of battery holder 11. Battery holder 11 holds secondary battery cells 1 and substrate 60. Battery holder 11 holding secondary battery cells 1 and substrate 60 constitutes battery unit 10. Substrate 60 is placed and fixed on a surface of battery holder 11.

Battery holder 11 holds secondary battery cells 1. Battery holder 11 is divided into two sub-holders 11A and 11B, sandwiches secondary battery cells 1 in longitudinal directions of the cells, and holds secondary battery cells 1. Each of sub-holders 11A and 11B forms a cylindrical accommodating space 13 that accommodates secondary battery cell 1. In the example, four secondary battery cells 1 are stacked and held in a posture of two rows by two columns. The number of secondary battery cells 1 and the manner of stacking are not limited to this configuration, and three or less, or five or more secondary battery cells may be held. The invention is not limited to two stages, and the secondary battery cells may be stacked in one stage, that is, all the secondary battery cells may be arranged on the same surface, or three or more stages. Other than the matrix arrangement, the secondary battery cells may be alternately arranged in a staggered among the stages. For example, the thickness of the battery holder can be reduced by setting the accommodating space to two stages and offsetting centers of the cylindrical shapes in the accommodating space in the upper and lower stages. Battery holder 11 is made of material, such as polycarbonate resin or ABS resin, with high insulation and heat resistance.

### Secondary Battery Cell 1

Each of secondary battery cell 1 is a cylindrical secondary battery cell including an outer can with a cylindrical shape. The cylindrical secondary battery cell has electrode surfaces on both end surfaces thereof. A safety valve is provided on one electrode surface includes a safety valve. The safety valve is configured to open to release gas inside when an internal pressure of the outer can rises. The safety valve is often provided closer to the positive electrode, but in the invention, a position of the safety valve is not limited to be closer to the positive electrode, and may be another position, for example, closer to a negative electrode. Battery holder 11 has slits 14 configured to release the gas discharged from the safety valve to the outside of battery holder 11 when the safety valve is opened.

A cylindrical lithium ion secondary battery may be suitably used as secondary battery cell 1. However, in the battery pack according to the invention, the secondary battery cell is not limited to the cylindrical battery or the lithium-ion secondary battery. As the secondary battery cell, all batteries that can be charged, for example, a nickel-metal hydride battery, a nickel-oxide battery, and the like can be used.

### Lead Plate

A lead plate (not shown) is fixed to an end surface of secondary battery cell 1. Secondary battery cells 1 are connected in series or in parallel to one another with the lead plate. The lead plate is made of a metal plate and is welded to secondary battery cells 1. A lead positioning guide along an outer shape of the lead plate is formed on an inner surface of battery holder 11 to position the lead plate at a predetermined position. The lead plate may be closer to an outer surface of the battery holder rather than closer to an inner surface of the battery holder. In this case, after the secondary battery cell is inserted into the accommodating space of the battery holder, the lead plate is fixed to the electrode surface of the secondary battery cell exposed from the battery holder. An output of battery unit 10 constituted by secondary battery cells 1 connected in series or in parallel via the lead plates is output from battery pack 100.

An upper surface of battery holder 11 is used as mounting surface 15 on which substrate 60 is mounted. A frame for holding substrate 60 may be formed on placement surface 15. Alternatively, a substrate holder for holding a substrate may be separately provided.

### Substrate 60

Substrate 60 has electronic circuits mounted thereon. The electronic circuits may be a voltage detection circuit that detects a total potential or an intermediate potential of a battery assembly in which secondary battery cells 1 are connected in series or in parallel, a control circuit that controls charging and discharging, and a safety circuit. Substrate 60 is formed in a rectangular shape.

### Outer Package Case 2

Outer package case 2 accommodating battery unit 10 therein has a rectangular parallelepiped box shape. In the example shown in FIG. 1, outer package case 2 is divided into first case 2A and second case 2B to sandwich battery unit 10 from the left and right to accommodate battery unit 10. A dividing direction in which first case 2A and second case 2B are divided perpendicularly crosses a direction in which battery holder 11 is divided into sub-holders 11A and 11B, thereby enhancing resistance to impact.

Each of first case 2A and second case 2B includes circumferential wall 4 provided around surface plate 3, and have a bottomed box shape with an opening in one side as a whole. First case 2A includes first surface plate 3A and first circumferential wall 4A provided around first surface plate 3A. Second case 2B includes second surface plate 3B and second circumferential wall 4B provided around second surface plate 3B. First circumferential wall 4A and second circumferential wall 4B have respective opening end portions coupled to each other to allow first case 2A and second case 2B to constitute a closed structure accommodating battery unit 10 therein.

In first case 2A and second case 2B shown in FIGS. 1 to 3, surface plate 3 is metal plate 16. First case 2A and second case 2B shown in the figures are opened at a bottom surface of the box shape, and openings are closed by metal plates 16 to form surface plates 3. Metal plate 16 has a lot of through-holes 17, and prevents a gas discharged from one of secondary battery cells 1 accommodated inside battery pack 100 from being ejected to the outside at a time, thereby preventing the flame from leaking to the outside of battery pack 100. Main bodies of first case 2A and second case 2B except for metal plates 16 are made of material having high insulating properties, for example, a resin such as polycarbonate or ABS. In outer package case 2 shown in the figured, metal plates 16 are substantially entire surfaces of surface plates 3, and the metal plates may be partially provided on the surface plates, or the surface plates may be entirely made of resin without disposing the metal plates.

In first case 2A and second case 2B shown in FIGS. 2 and 3, overlap plates 5 are unitarily connected to circumferential walls 5 along respective opening ends of circumferential walls, overlap plates 5 are stacked inside and outside on each other. In outer package case 2 shown in the figures, cross sections of circumferential walls 4 of first case 2A and second case 2B are substantially rectangular shapes. Overlap plates 5 are provided over entire circumferences of opening ends of circumferential walls 4. First overlap plate 5A stacked outside is connected to first circumferential wall 4A, and second overlap plate 5B stacked inside is connected to second circumferential wall 4B.

As shown in FIG. 3, first overlap plate 5A extends from the opening end of first case 2A toward first circumferential wall 4A, and is unitarily formed with first circumferential wall 4A to protrude from a tip end edge of first circumferential wall 4A along an extending direction in which circumferential walls 4 extend. First overlap plate 5A is thinner than first circumferential wall 4A, and has a stepped shape such that an outer surface of first overlap plate 5A is flush with an outer surface of first circumferential wall 4A, and an inner surface of first overlap plate 5A is lower than an inner surface of first circumferential wall 4A. In order to increase the strength of first overlap plate 5A thinner than circumferential wall 4, first overlap plate 5A includes reinforcement ribs 6 protruding inward. Reinforcement ribs 6 shown in the figures are ridges unitarily formed with first overlap plate 5A, and extend from a tip end of first overlap plate 5A to tip end surface 4a of first circumferential wall 4A. First overlap plate 5A of the structure includes reinforcement ribs 6 protruding inward, so that a secondary moment of area in a cross section toward a bending direction is increased to prevent deformation in an outward direction. Therefore, even in a state where a gas is discharged from one of secondary battery cells 1 accommodated in outer package case 2 and the gas passes from a boundary portion between first overlap plate 5A and second overlap plate 5B to the outside, first overlap plate 5A is prevented from deforming in the outward direction, a flammable gas inside the battery pack is be safely released to the outside of the battery pack, and the gas is effectively prevented from being ejected to the outside at a time.

Reinforcement ribs 6 shown in FIG. 5 are ridges having cross sections with rectangular shapes. Reinforcement ribs 6 having the shapes enhance the strength with a simple structure. However, the cross-sectional shapes of the reinforcement ribs are not limited to the rectangular shapes, and may be triangular shapes or shapes with distal end surfaces with curved shapes. Reinforcement rib 6 having a cross section with a rectangular shape is formed such that a distal end surface in a height direction (a lower end surface in FIG. 5) is flush with the inner surface of first circumferential wall 4A.

As shown in a partially enlarged view shown in FIG. 3 and an exploded cross-sectional view shown in FIG. 6, first overlap plate 5A described above has thickness (t1) ranging from 0.5 mm to 1.5 mm, protruding amount (L1) from first circumferential wall 4A ranging from 1.5 mm to 5.0 mm, horizontal width (d1) of reinforcement rib 6 ranging from 0.2 mm to 1.0 mm, height (h1) ranging from 1.0 mm to 3.0 mm, center-to center distance (M1) of adjacent reinforcement ribs ranging from 3.0 mm to 5.0 mm, and total length (H1) of the reinforcement rib substantially equal to the protruding amount (L1) of first overlap plate 5A, thereby forming a shape reinforcing first overlap plate 5A. However, total length (H1) of the reinforcement rib may be shorter than protruding amount (L1) of first overlap plate 5A.

As shown in FIG. 2, second overlap plate 5B extends from the opening end of second case 2B toward second circumferential wall 4B, and is unitarily formed with second circumferential wall 4B to protrude from distal end surface 4b of second circumferential wall 4B along the extending direction in which circumferential walls 4 extend. Second overlap plate 5B is thinner than second circumferential wall 4B, and has a stepped shape in which an inner surface of second overlap plate 5B is flush with an inner surface of second circumferential wall 4B and an outer surface of second overlap plate 5B is lower than an outer surface of second circumferential wall 4B. Second overlap plate 5B includes fit portions 7 for guiding reinforcement ribs 6 provided on first overlap plate 5A. Fit portions 7 shown in the figures are slits 7A provided in second overlap plate 5B. Slits 7A shown in the figures extend from an end of second overlap plate 5B to the tip end surface of second circumferential wall 4B. Fit portions 7, which are slits 7A, face reinforcement ribs 6 provided on first overlap plate 5A and have sizes and shapes to which reinforcement ribs 6 are fitted.

As shown in FIG. 2, second overlap plate 5B is divided into split plate portions 5b by slits 7A. Split plate portions 5b are thus fitted to fitting recesses 5a demarcated by reinforcement ribs 6 protruding toward the inner surface of first overlap plate 5A and tip end surface 4a of first circumferential wall 4A, and are connected at predetermined positions. That is, in first case 2A and second case 2B, by guiding reinforcement ribs 6 provided on the inner surface of first overlap plate 5A to fit portions 7 provided in second overlap plate 5B and guiding split plate portions 5b of second overlap plate 5B to fitting recesses 5a of first overlap plate 5A, the opening end portions of first case 2A and second case 2B are reliably connected to each other by the fitting structure.

In first overlap plate 5A, as shown in FIGS. 3 and 6, a corner between the tip end surface and the inner side surface and a corner between the tip end surface and the upper end surface of each reinforcement rib 6 are chamfered. In second overlap plate 5B, as shown in FIGS. 2 and 6, an opening edge portion of each slit 7A and a corner between the tip end surface and the inner side surface are chamfered. This configuration reduces a contact between first overlap plate 5A and second overlap plate 5B at the time of connecting first case 2A and second case 2B, and facilitate split plate portions 5b of second overlap plate 5B to be easily guided to fitting recesses 5a of first overlap plate 5A, and reinforcement ribs 6 are easily fitted to slits 7a.

In second overlap plate 5B described above, thickness (t2), protruding amount (L2) from second circumferential wall 4B, horizontal width (d2) of slits 7A, center-to-center distance (M2) between adjacent slits, and total length (H2) of the slits, which are shown in the partially enlarged view shown in FIG. 2, are appropriately adjusted, so that first overlap plate 5A including reinforcement ribs 6 may be connected by the fitting structure. For example, in second overlap plate 5B, thickness (t2) may be equal to height (h1) of reinforcement ribs 6, protruding amount (L2) from second circumferential wall 4B may be equal to protruding amount (L1) of first overlap plate 5A, horizontal width (d2) of slits 7A may be slightly larger than horizontal width (d1) of reinforcement ribs 6, and total length (H2) of each slit 7A may be equal to total length (H1) of each reinforcement rib 6.

In outer package case 2 shown in the drawings, thickness (t1) of first overlap plate 5A is equal to thickness (t2) of second overlap plate 5B, which is approximately 1/2 of thicknesses (s) of circumferential walls 4. In the structure, in a state where overlap plates 5 facing each other are stacked on each other, thickness (t1+t2) of a stacked portion is equal to thicknesses (s) of circumferential walls 4. However, the first overlap plate and the second overlap plate do not necessarily have the same thickness, and may have different thicknesses. For example, the first overlap plate may be thicker than the second overlap plate. Since the first overlap plate is stacked on an outer side of the second overlap plate, the thicker first overlap plate effectively prevents deformation of the first overlap plate in the outward direction when a gas pressure in the outer package case increases. Even when the first overlap plate and the second overlap plate have different thicknesses, thickness (t1+t2) of a stacked portion of the first overlap plate and the second overlap plate is preferably equal to the thicknesses (s) of the circumferential walls.

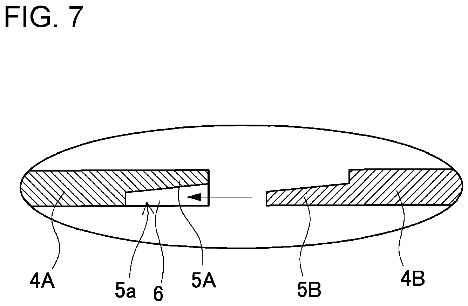

First overlap plate 5A and second overlap plate 5B shown in the drawings are formed such that the thickness from a distal end thereof to a proximal end thereof is constant. However, as shown in FIG. 7, first overlap plate 5A and second overlap plate 5B may be thinner from the proximal end toward the distal end. This structure provides an advantageous effect that a distal end of each of split plate portions 5b of second overlap plate 5B, which are to be inserted to fitting recesses 5a formed in first overlap plate 5A, can be thin while the depth of a distal end of each of fitting recessed portions 5a is increased, and thus first overlap plate 5A and second overlap plate 5B can be smoothly connected when first overlap plate 5A and second overlap plate 5B are fitted to each other from the tip ends.

In first case 2A and second case 2B of the above structure, first overlap plate 5A and second overlap plate 5B are stacked on each other and connected to each other by guiding reinforcement ribs 6 on first overlap plate 5A with slits 7A provided in second overlap plate 5B. In this way, in the structure in which fit portions 7 are slits 7A, height (h1) of reinforcement ribs 6 may be equal to thickness (t2) of the second overlap plate. Accordingly, distal end surfaces of reinforcement ribs 6 may be flush with the inner surface of second overlap plate 5B connected to each other, thus allowing an inner surface of the stacked portion to be flat. However, heights (h1) of reinforcement ribs 6 may be larger than thickness (t2) of second overlap plate 5B. This structure further increases the strength of first overlap plate 5A.

### Exemplary Embodiment 2

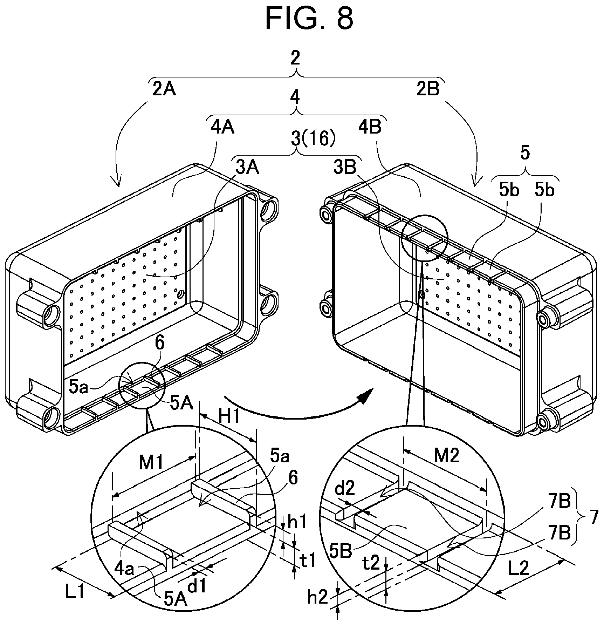

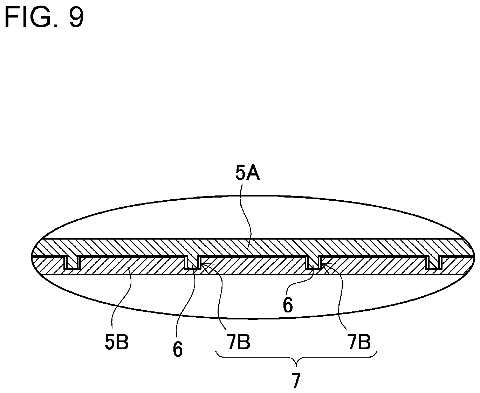

In outer package case 2 describe above, fit portions 7 of second overlap plate 5B are slits 7A, and the fit portions formed in the second overlap plate may be grooves. In outer package case 2 shown in FIGS. 8 and 9, second overlap plate 5B of second case 2B has grooves 7B provided at positions facing reinforcement ribs 6 provided on first overlap plate 5A of first case 2A to form fit portions 7. Grooves 7B shown in the figures extend from the distal end of second overlap plate 5B to end surface 4a of second circumferential wall 4B, and has sizes and shapes fit to reinforcement ribs 6 provided on first overlap plate 5A. Depths (h2) of grooves 7B are smaller than thickness (t2) of second overlap plate 5B and substantially equal to heights (h1) of reinforcement ribs 6 of first overlap plate 5A. Reinforcement ribs 6 formed on first overlap plate 5A are lower than reinforcement ribs 6 shown in FIG. 3 described above, and are formed such that distal end surfaces of reinforcement ribs 6 are lower than the inner surface of first circumferential wall 4A. In this way, the structure in which fit portions 7 are grooves 7B provides an advantageous effect that second overlap plate 5B has a unitarily-connected structure without dividing second overlap plate 5B into pieces, and first overlap plate 5A can be reinforced by reinforcement ribs 6 while fitting reinforcement ribs 6 of first overlap plate 5A to grooves 7B by the fitting structure.

### Exemplary Embodiment 3

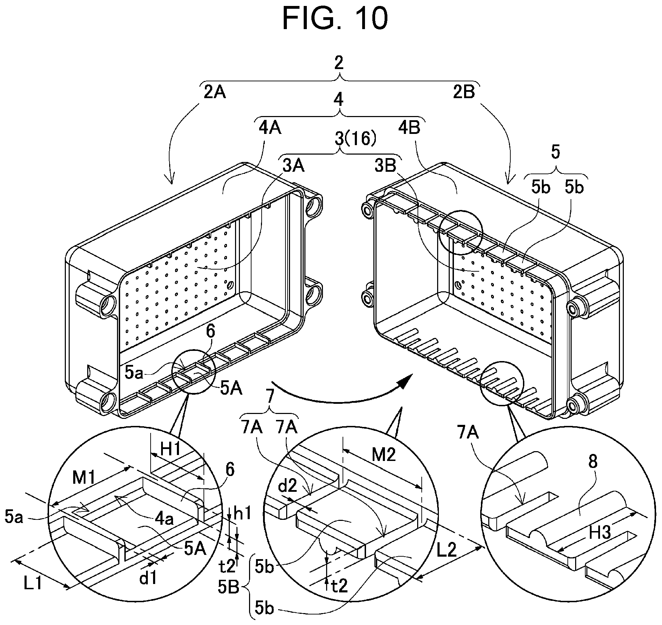

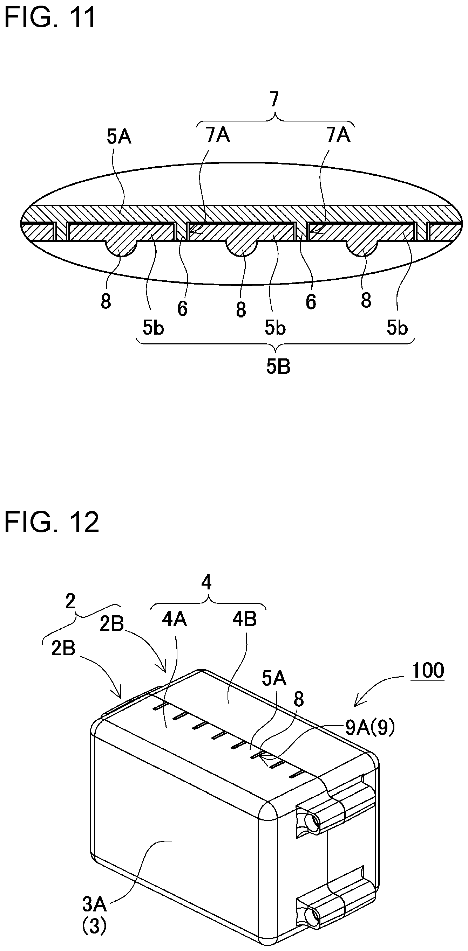

Outer package case 2 described above has a structure in which first overlap plate 5A is reinforced by reinforcement ribs 6 to prevent deformation due to the gas discharged from secondary battery cells 1 accommodated in outer package case 2. The reinforcement ribs may be provided on the second overlap plate. In outer package case 2 shown in FIGS. 10 and 11, second overlap plate 5B of second case 2B includes second reinforcement ribs 8 protruding inward. First case 2A shown in the figures has the same structure as first case 2A shown in FIGS. 1 to 4 described above. Second case 2B also has the same structure as that of second case 2B shown in FIGS. 1 to 4, except that second reinforcement ribs 8 are provided on inner surface of second overlap plate 5B.

In second case 2B shown in FIGS. 10 and 11, second reinforcement ribs 8 are unitarily formed on the inner surface of second overlap plate 5B. Second reinforcement ribs 8 are positioned at center portions of split plate portions 5b divided by fit portions 7 which are slits 7A, and extend from the opening end of second case 2B toward second circumferential wall 4B. Second reinforcement ribs 8 shown in the figures have total length (H3) extending from the distal end of second overlap plate 5B to an end portion of second circumferential wall 4B beyond a proximal end of second overlap plate 5B, which is larger than protruding amount (L2) of second overlap plate 5B. The structure in which second reinforcement ribs 8 extend from second overlap plate 5B to second circumferential wall 4B more effectively prevents the deformation of second overlap plate 5B. Second reinforcement ribs 8 shown in the figures are ridges having cross sections with semicircular shapes. Second reinforcement ribs 8 having the shape provide an advantageous effect to reliably reinforce second overlap plate 5B while maintaining a preferably contact with battery unit 10 or the like accommodated in outer package case 2.

Second overlap plate 5B described above includes second reinforcement ribs 8 protruding inward, so that the secondary moment of area in a cross section can be increased to prevent the deformation against the gas pressure. Therefore, even when the gas is discharged from one of secondary battery cells 1 accommodated inside outer package case 2, first overlap plate 5A and second overlap plate 5B are prevented from deforming in the outward direction, and the fitting connection portion of the outer package case can be more effectively prevented from being broken.

### Exemplary Embodiment 4

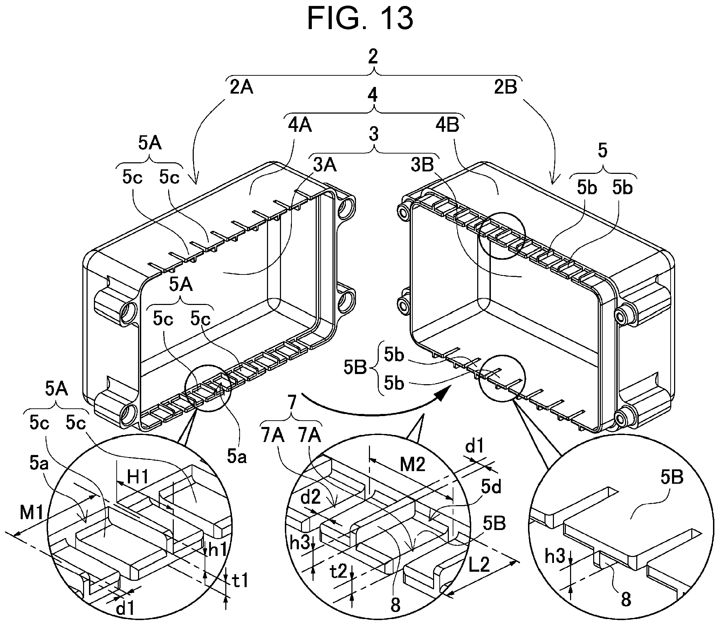

Outer package case 2 may have a structure shown in FIGS. 12 to 14. In outer package case 2 shown in the drawings, reinforcement ribs 6 are provided on the inner surface of first overlap plate 5A of first case 2A, and fit portions 7 which are slits 7A for guiding reinforcement ribs 6 of first overlap plate 5A are provided in second overlap plate 5B of second case 2B. Second reinforcement ribs 8 are provided on the outer surface of second overlap plate 5B of second case 2B, and second fit portions 9 which are slits 9A for guiding second reinforcement ribs 8 provided on second overlap plate 5B is provided in first overlap plate 5A of first case 2A.

In second overlap plate 5B, second reinforcement ribs 8 are unitarily formed with second overlap plate 5B and protrude from center portions of outer surfaces of split plate portions 5b divided by fit portions 7 which are slits 7A and extending from distal end surfaces of split plate portions 5b to distal end surface 4b of second circumferential wall 4B. Second reinforcement ribs 8 provided on second overlap plate 5B may have the same shapes and sizes as reinforcement ribs 6 provided on first overlap plate 5A.

First overlap plate 5A is divided into split plate portions 5c by fit portions 9 which are slits 9A, and is formed such that reinforcement ribs 6 protrude from center portions of inner side surfaces of split plate portions 5c. Second fit portions 9 which are slits 9A provided in first overlap plate 5A may have the same shapes and sizes as fit portions 7 which are slits 7A provided in second overlap plate 5B.

First case 2A and second case 2B of the structure are connected to each other by guiding reinforcement ribs 6 of first overlap plate 5A to fit portions 7 of second overlap plate 5B and guiding second reinforcement ribs 8 of second overlap plate 5B to second fit portions 9 of first overlap plate 5A. At this moment, split plate portions 5b obtained by dividing second overlap plate 5B are guided to fitting recesses 5a of first overlap plate 5A, and split plate portions 5c obtained by dividing first overlap plate 5A are guided to fitting recesses 5d formed between second reinforcement ribs 8 on an outer surface of second overlap plate 5B.

As shown in FIG. 12, in outer package case 2, on an outer surface of first case 2A, second reinforcement ribs 8 are exposed from second fit portions 9 which are slits 9A formed in first overlap plate 5A. In outer package case 2, height (h3) of second reinforcement ribs 8 is equal to thickness (t1) of first overlap plate 5A. Accordingly, the outer surface of first overlap plate 5A is flush with an upper surface which is outer side surfaces of second reinforcement ribs 8 connected to each other, and an outer side surface of a stacked portion has a planar shape, thereby enhancing the touch feeling while providing a beautiful appearance.

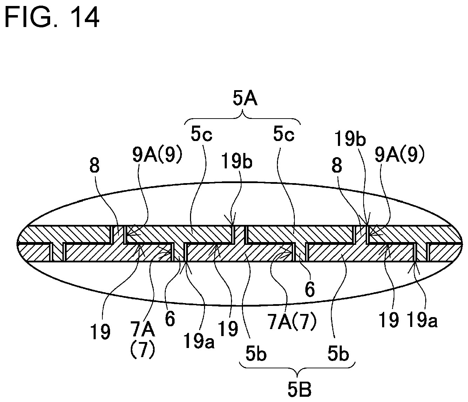

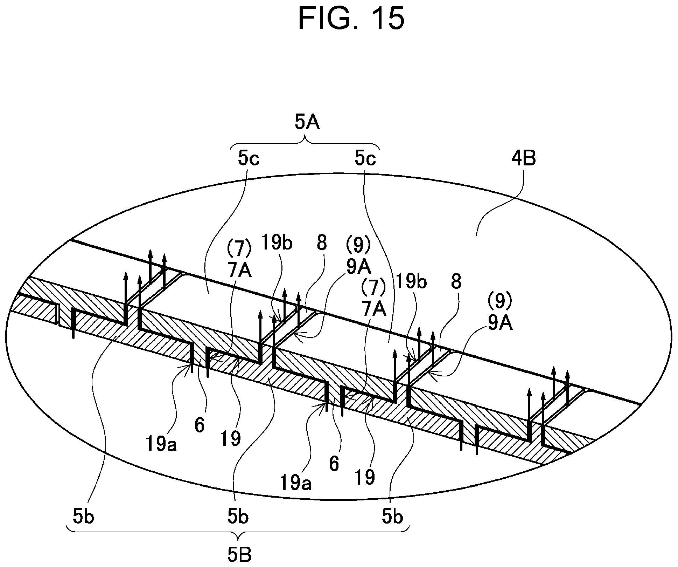

In outer package case 2 described above, fit portions 7 provided in second overlap plate 5B and second fit portions 9 provided in first overlap plate 5A are slits 7A and 9A. As shown in FIGS. 14 and 15, while first overlap plate 5A are stacked on second overlap plate 5B, meandering flow path 19 is formed between fit portion 7 and second fit portion 9 adjacent to each other. Meandering flow path 19 is configured to allow gas to pass from the inside to the outside of outer package case 2 Meandering flow path 19 is a flow path of a gas formed between first overlap plate 5A and second overlap plate 5B stacked on each other, and configured to allows a gas flowing in from a position between reinforcement ribs 6 and slits 7A formed closer to an inner surface of second overlap plate 5B to pass through between stacked surfaces of second overlap plate 5B and first overlap plate 5A to flow from a position between second reinforcement rib 8 and slits 9A formed in an outer surface of first overlap plate 5A to the outside. Meandering flow path 19 is not necessarily opened, but when an abnormality occurs in one of accommodated secondary battery cells 1 and a high-temperature and high-pressure gas is discharged to increase the internal pressure, the gas passes from the inside to the outside of outer package case 2 to be discharged. In this way, a lot of meandering flow paths 19 are gaps formed narrow as much as possible between first overlap plate 5A and second overlap plate 5B stacked and fit to each other and have long planar distances, and are configured to allow the gas to pass through meandering flow paths 19. This configuration safely discharges the gas inside while reducing a discharge amount without discharging the gas at a time. In particular, fit portions 7 and second fit portions 9 are slits 7A and 9A and a total length of inflow portions 19a and outflow portions 19b of meandering flow paths 19 formed in the inner surface and the outer surface of overlap plates 5 is long. This configuration controls the passage resistance of the gas and allows the gas in outer package case 2 to be safely discharged to the outside.

In outer package case 2 according to Embodiments 1 to 4, the cross sections of the circumferential walls of first case 2A and second case 2B have substantially rectangular shapes, and reinforcement ribs 6 and fit portions 7 are provided only on overlap plates 5 located on portions of circumferential walls 4 at the long sides of the rectangular shape. This structure effectively prevents the fitting connection portion of outer package case 2 from breaking since first overlap plate 5A is reinforced with reinforcement ribs 6 on the long side, which is easier to deform than the short side of the rectangular shape. However, in the outer package case, the reinforcement ribs and the fit portions may be further provided on the overlap plates positioned on the short sides of the circumferential walls having a rectangular shape. This structure effectively prevents the fitting connection portion of the outer package case from breaking since the first overlap plate is reinforced by the reinforcement ribs over the entire peripheries of the circumferential walls.

### INDUSTRIAL APPLICABILITY

A battery pack according to the invention is suitably used as a power supply of a portable electric device such as an electric cleaner or an electric power tool. The invention can be appropriately used for applications such as a power supply device for a movable body such as a power-assisted bicycle or an electric cart.

### REFERENCE MARKS IN THE DRAWINGS

- 100: battery pack
- 1: secondary battery cell
- 2: outer package case
- 2A: first case
- 2B: second case
- 3: surface plate
- 3A: first surface plate
- 3B: first surface plate
- 4: circumferential wall
- 4A: first circumferential wall
- 4a: tip end surface
- 4B: second circumferential wall
- 4b: tip end surface
- 5: overlap plate
- 5A: first overlap plate
- 5a: fitting recessed portion
- 5c: split plate portion
- 5B: second overlap plate
- 5b: split plate portion
- 5d: fitting recessed portion
- 6: reinforcement rib
- 7: fit portion
- 7A: slit
- 7B: groove
- 8: second reinforcement rib
- 9: second fit portion
- 9A: slit
- 10: battery unit
- 11: battery holder
- 11A, 11B: sub-holder
- 13: accommodating space
- 14: slit
- 15: placement surface
- 16: metal plate
- 17: through hole
- 19: meandering flow path
- 19a: inflow portion
- 19b: outflow portion
- 60: substrate
- 92: outer package case
- 93: fitting connection portion
- 94: flow path
- 95: stacked portion

## Claims

1. A battery pack comprising a battery unit and an outer package case accommodating the battery unit therein, wherein
the outer package case includes:
a first case including a first surface plate and a first circumferential wall provided around the first surface plate; and
a second case including a second surface plate and a second circumferential wall provided around the second surface plate,
the first circumferential wall and the second circumferential wall have respective opening end portions coupled to each other to allow the first case and the second case to constitute a closed structure accommodating the battery unit therein,
overlap plates are unitarily connected to the first circumferential wall and the second circumferential wall along respective opening ends of the first circumferential wall and the second circumferential wall, the overlap plates being stacked inside and outside on each other,
a first overlap plate out of the overlap plates is connected to the first circumferential wall at the outer side,
a second overlap plate out of the second overlap plates is connected to the second circumferential wall at the inner side,
the first overlap plate includes reinforcement ribs which extend from an opening end of the first overlap plate toward the first circumferential wall and which protrude inward,
the second overlap plate includes fit portions therein which are slits or grooves configured to guide the reinforcement ribs, and
the first case and the second case are connected to each other such that by the fit portions guide the reinforcement ribs to stack the first overlap plate on the second overlap plate.

2. The battery pack according to claim 1, wherein the fit portions are the slits, and heights of the reinforcement ribs are equal to a thickness of the second overlap plate.

3. The battery pack according to claim 1 or 2, wherein
the second overlap plate includes second reinforcement ribs which extend from an opening end of the second overlap plate toward the second circumferential wall and which protrude outward,
the first overlap plate includes second fit portions therein which are slits or grooves configured to guide the second reinforcement ribs, and
the first case and the second case are connected to each other such that the second fit portions guide the second reinforcement ribs to stack the first overlap plate on the second overlap plate.

4. The battery pack according to claim 3, wherein the second fit portions are the slits, and heights of the second reinforcement ribs is equal to a thickness of the first overlap plate.

5. The battery pack according to claim 3 or 4, wherein
the fit portions are the slits and the second fit portions are the slits, and
each fit portion out of the fit portions and a corresponding one second fit portion of the second fit portions adjacent to each other form a meandering flow path between the each fit portion and the corresponding one second fit portion, the meandering flow path being configured to passes from an inside of the outer package case to an outside of the outer package case through the meandering flow path.

6. The battery pack according to claim 1 or 2, wherein
the second overlap plate includes reinforcement ribs which extend from an opening end the second overlap plate toward the second circumferential wall and which protrude inward, and
the first case and the second case are connected to each other such that the first overlap plate is stacked on the second overlap plate.

7. The battery pack according to any one of Claims 1 to 6, wherein thicknesses of the first overlap plate and the second overlap plate are 1/2 of a thickness of the circumferential walls.

8. The battery pack according to any one of claims 1 to 7, wherein
cross sections of the circumferential walls of the first case and the second case have rectangular shapes, and the overlap plates are provided over entire circumferences of opening ends of the circumferential walls, and
the reinforcement ribs and the fit portions are provided at portions of the overlap plates located on long sides of the rectangular shapes of the circumferential walls.
